# EUROPEAN PATENT APPLICATION

(11) **EP 4 245 972 A1**
(43) Date of publication of application: **20.09.2023**
(21) Application number: 22162911.6
(22) Date of filing: 18.03.2022
(51) Int. Cl.: F01N 13/10, F01N 3/20, F01N 13/00, F01N 13/08, F01N 3/28, F01N 3/10

(54) **EXHAUST GAS AFTER TREATMENT DEVICE**

(71) Applicant: Winterthur Gas & Diesel Ltd., 8401 Winterthur (CH)
(72) Inventor: Sönnichsen, Samuel, 8405 Winterthur (CH)
(74) Representative: Hepp Wenger Ryffel AG

(57) **Abstract**

The invention relates to an exhaust gas after treatment device (100) for an internal combustion engine, an internal combustion engine and a method for exhaust gas after treatment.

The exhaust gas after treatment device (100) comprises an elongated exhaust manifold (10) with a plurality of inlet ports (11) and a catalyst container (20).The exhaust manifold (10) and the catalyst container (20) are arranged adjacently next to one another and are delimited from one another by at least one partition wall (30) extending along a longitudinal direction (L). The exhaust gas manifold (10) is fluidly connected with the catalyst container (20) over at least one passage (31), which is provided in the partition wall (30), to guide exhaust gas into the catalyst container (20). At least one reductant supply element (12), for example an urea injector, is arranged in the exhaust manifold (10) within or close to at least one inlet port (11). At least one flow guiding element (15) is arranged in the exhaust manifold (10) for guiding exhaust gas towards the passage (31).

## Description

The invention relates to an exhaust gas after treatment device for an internal combustion engine, an internal combustion engine and a method for exhaust gas after treatment.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on. Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

EP2527611 A1 discloses an exhaust gas after treatment device for a large diesel engine comprising an elongated exhaust manifold with a plurality of inlets and a catalyst container. The exhaust manifold and the catalyst container are arranged essentially parallel next to one another and are delimited from one another by at least one partition running in each case in the longitudinal direction. The exhaust manifold is connected to the catalyst container via one or more orifices provided in the partition or partitions, in order to conduct the exhaust gases during operation through the catalyst elements to the respective outlet.

The device comprises at least one mixing tube, each of which extends from an exhaust gas collector through a passage into the catalyst container, and in each of which one or more nozzles for injecting reducing agent are provided.

As the nozzles are arranged realtatively close to the SCR elemets there is the risk of unsuficcent mixture between exhauts ags and reducing agent and a slip of reducing agent.

EP2860369 A1 discloses an exhaust after treatment system wherein a directing device is provided in the exhaust flow path upstream of a reductant opening into the exhaust flow path. The directing device is configured to direct an exhaust flow toward the reductant opening and around the directing device to effectively mix the exhaust flow with a reductant provided through the reductant opening to reduce the formation of reductant deposits.

DE112012003742 B4 relates to an exhaust gas treatment system, wherein an exhaust gas flow modifier is provided upstream from a reagent injector to enhance distribution of the reagent within the engine exhaust stream.

EP2074293A1 discloses an exhaust gas flow regulator installed in an exhaust pipeline comprising catalytic corrugated metal plates with the corrugation direction of their folds being in an angle towards the average flow direction of the exhaust gas for regulating the exhaust gas flow at least in the lateral direction.

The invention is based on the task of providing an exhaust gas after treatment device and an internal combustion engine which avoid the disadvantages of the known, which in particular provide for a sufficient and homogenous mixing of exhaust gas and reducing agent.

The object is achieved by the characteristics of the independent claims.

According to the invention an exhaust gas after treatment device to be used in an internal combustion engine comprises an elongated exhaust manifold with a plurality of inlet ports and a catalyst container.

The exhaust manifold and the catalyst container are arranged adjacently next to one another and are delimited from one another by at least one partition wall extending along a longitudinal direction.

Thus, the exhaust manifold and the catalyst container each extend more in the longitudinal direction than in perpendicular directions.

The exhaust gas manifold is fluidly connected with the catalyst container over at least one passage, which is provided in the partition wall, to guide exhaust gas into the catalyst container.

A passage valve may be arranged in the passage.

At least one reductant supply element, for example a urea injector, is arranged in the exhaust manifold within or close to at least one inlet port.

The inlet port is arranged in the wall of the exhaust manifold to fluidly connect the exhaust outlet of a cylinder with the inner volume of the exhaust manifold. Exhaust gas may be guided into the exhaust manifold via the inlet port.

At least one flow guiding element is arranged in the exhaust manifold for guiding exhaust gas towards the passage.

As the reductant supply element is arranged within or close to the inlet port, it takes some time until the reducing agent reaches the passage. This time is especially needed for homogenous mixing, when the reducing agent is admitted continuously whereas the exhaust gas arrives stroke-by-stroke.

Exhaust gas and reducing agent may mix within the exhaust manifold. However, as there may be more inlet ports than reductant supply elements, the part of the exhaust gas, which is introduced into the exhaust manifold by inlet ports without reductant supply element or with no reductant supply element close to the respective inlet port may have less opportunity to come into contact with the reducing agent than exhaust gas, which is introduced into the exhaust manifold by inlet ports with reductant supply element. Reducing agent may unequally be distributed within the exhaust gas.

In particular, there may be the risk of exhaust gas entering the passage which was not in contact with reducing agent at all. This exhaust gas would escape uncleaned from the exhaust gas after treatment device.

The flow guiding element is arranged such that there is a certain minimal way between inlet port and passage and thus a certain minimal duration of stay within the exhaust manifold for all the exhaust gas, especially for exhaust gas introduced by inlet ports without reductant supply element.

The flow guiding element provides for the opportunity of sufficient mixing and equal distribution of reducing agent in the exhaust gas.

Preferably, the flow guiding element provides for a flow path of a certain length, with is arranged upstream and directly adjacent the passage.

The exhaust gas after treatment device may comprise at least one flow guiding element for each passage. Thus, there is no passage, through which unmixed exhaust gas may enter the catalyst container.

The flow guiding element may be an inlet tube with a first end which is open towards the passage and with a second end which is open towards the exhaust manifold. The inlet tube forms an inlet channel leading from the inner volume of the exhaust manifold to the passage. The length of the tube defines the minimal path lengths and thereby a certain minimal time is available for mixing of exhaust gas and reducing agent.

The flow guiding element may comprise a tube wall being arranged on the partition wall, such that exhaust gas is guidable to the passage between the tube wall and the partition wall. A part of the inlet tube is formed by the partition wall.

The flow guiding element, in particular the tube wall may be fixed within the exhaust gas manifold, such that the flow guiding element keeps its position when the internal combustion engine is in operation, and the internal combustion engine is moving due to wind and/or waves, especially when the ship comprising the internal combustion engine is on its way.

The flow guiding element may be fixed within the exhaust gas manifold by a connection with the outer wall of the exhaust gas manifold and/or by a connection with the partition wall

The flow guiding element, in particular the tube wall may be fixed by clamping, by a screw connection or by welding. Preferably, there is a detachable connection between the flow guiding element and the exhaust gas manifold and/or the partition wall.

The flow guiding element may be removed from the exhaust gas manifold for maintenance of the exhaust gas after treatment device, for cleaning and/or renewal.

At least one reductant supply element may be arranged in the middle section of the elongated exhaust manifold.

The exhaust gas after treatment device may comprise at least three inlet ports for feeding exhaust gas into the exhaust manifold arranged next to each other in longitudinal direction. Each inlet port may be fluidly connectable or connected to a cylinder.

Preferably, at least one reductant supply element is arranged in one of the central inlets. Central inlets have at least one neighbouring inlet on both sides in longitudinal direction.

The partition wall may comprise two passages, each arranged at respective longitudinal ends of exhaust manifold.

A central arrangement of the reductant supply element and an arrangement of the passage at a longitudinal end provides for a minimal path and thus a minimal residence time of the reducing unit within the exhaust manifold, especially allowing mixing with non-continuously admitted exhaust gas.

The exhaust manifold may comprise a bypass outlet with a valve. The bypass valve may be opened in case no exhaust cleaning is necessary, for example when the engine is operated in TIER II mode. In this case, admittance of reducing agent may be stopped and the passages may be closed by the passage valves.

The exhaust gas after treatment device may comprise louver valves for closing the passage. The louver valves may be opened when the exhaust gas shall be guided through the SCR elements, for example when the engine is operated in TIER III mode. When operation of the engine is switched to TIER II mode, the louver valves may be closed and the bypass valve may be opened. Typically, the louver valves do not close completely. Exhaust gas directly streaming from the inlet port to the passage may therefor enter the catalyst container through the closed louver valves. The flow guiding element may be arranged as described above such that it prevents a direct flow from the inlet port to the passage and thereby protects the louver valves from unintentionally being opened. A contamination of the SCR elements can thus be avoided.

The flow guiding element reduces the effect of pressure fluctuations in the exhaust manifold on the louver valves.

The catalyst container may comprise two stacks of SCR elements and a central passage which is connected or connectable to an exhaust outlet. Exhaust gas may enter the catalyst container via two passages arranged at the longitudinal ends of the partition wall, may be guided through the two stacks of SCR elements and may come together in the central passage.

The exhaust outlet and/or the bypass outlet may be fluidly connectable or connected with an outlet pipe which may guide the exhaust gas towards a turbocharger.

Stacks of SCR elements may be arranged in the catalyst container. For example at least three SCR elements are arranged within one stack. The catalyst container may comprise rails for each of the stacks for guiding the stacks along the longitudinal direction. The catalyst container may be openable at the longitudinal ends for removing and introducing a stack with SCR elements.

SCR elements have to be placed within the catalyst container very precisely, with a shortest possible distance towards the wall of the catalyst container and with a defined distance towards each other. Catalyst elements therefore may be arranged as stacks and may be fixed to a stack frame. The stack frame may provide counter elements, such as matching recesses, for the rails.

According to the invention an internal combustion engine comprising at least one cylinder and at least one exhaust gas after treatment device as described above. In particular internal combustion engine comprises one exhaust gas after treatment device for up to eight cylinders, preferably for up to six cylinders.

According to the invention a method of wherein exhaust gas is guided into the exhaust manifold via a plurality of inlet ports and wherein reducing agent is admitted via a reductant supply element. The method at least comprises the following steps.

Exhaust gas and reducing agent are guided along the flow guiding element, such that mixing of exhaust gas and reducing agent takes place at least while passing the flow guiding element and before entering the catalyst container via a passage in the partition wall.

Further advantageous aspects of the invention are explained in the following by means of exemplary embodiments and the figure. In the drawing, in a schematic manner:
- Figure 1:: shows a schematic illustration of a first example of a combustion engine in perspective view;
- Figure 2:: shows a schematic illustration of a first example of an exhaust gas after treatment device in a perspective view;
- Figure 3:: shows a schematic illustration of a detail of the first example according to Figure 2.

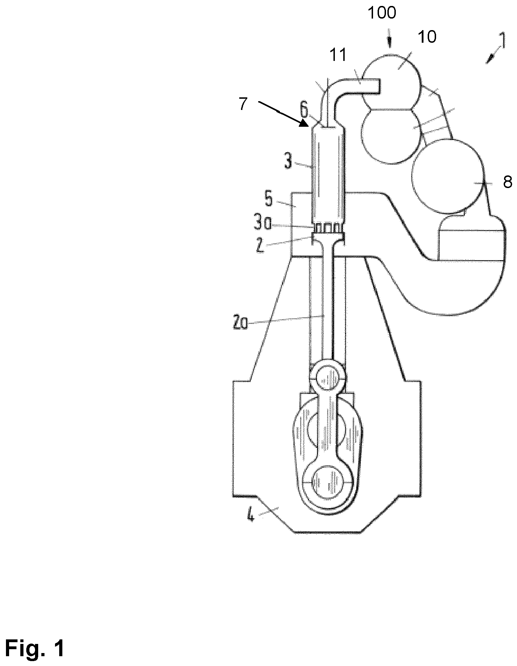

Figure 1 shows an embodiment of a large combustion engine 1. Typically, large-bore combustion engines contain one or more of the following components: A crankshaft rotatably mounted in a crankshaft housing 4, at least one crosshead and at least one piston 2 movably arranged in a cylinder 3. Usually, the piston 2 is connected to the crosshead via a piston rod 2a in each case, and the crosshead is connected to the crankshaft via a push rod in each case to drive the crankshaft. A combustion chamber is formed between the piston 2 and the cylinder cover 7.

Longitudinal scavenging of the cylinder chamber may be provided, i.e. the scavenging air flows from a scavenge air receiver 5 into the cylinder 3 via scavenging slots 3a in the cylinder liner as soon as the piston 2 is below the scavenging slots 3a. The scavenging air flow forces the exhaust gases of the combustion through an exhaust valve 6 in the cylinder cover 7 and through an inlet port 11 into an exhaust manifold 10 of an exhaust gas after treatment device 100.

The combustion engine 100 additionally may include a turbocharger 8, wherein the exhaust gas after treatment device 100 is arranged between the exhaust valves 6 of the combustion engine 100 and the exhaust gas turbocharger 8. After expansion of the exhaust gases in the turbocharger 8, the exhaust gases may be discharged to the outside.

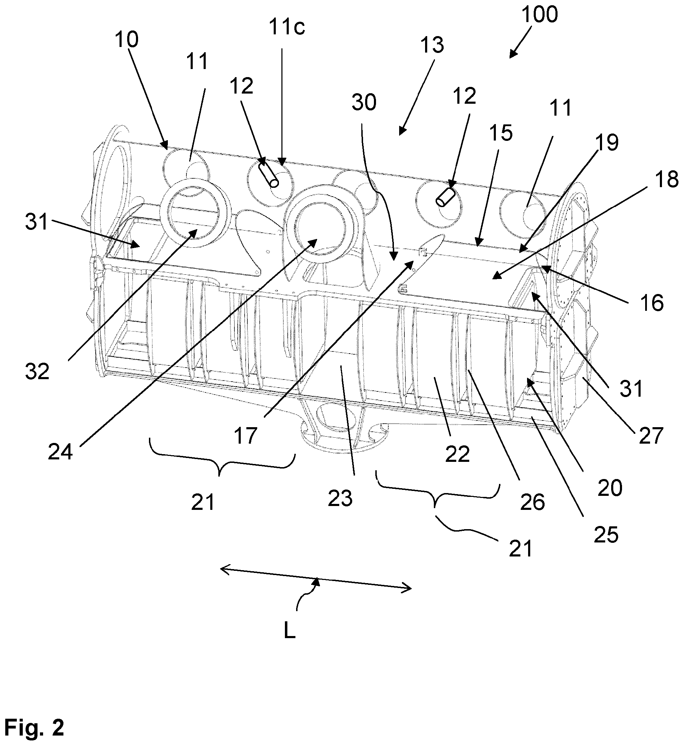

Figure 2 shows a schematic illustration of a first example of an exhaust gas after treatment device 100 in a perspective view.

The exhaust gas after treatment device 100 comprises an elongated exhaust manifold 10 with five inlet ports 11.

The exhaust gas after treatment device 100 further comprises a catalyst container 20, which is arranged below the exhaust manifold 10 and is delimited from the exhaust manifold 10 by a partition wall 30 extending along a longitudinal direction L.

The exhaust gas manifold 10 is fluidly connected with the catalyst container 20 over two passages 31, which are provided in the partition wall 30 at the respective longitudinal ends of exhaust manifold 10.

Reductant supply elements 12 are arranged within two of the central inlet ports 11a.

Flow guiding elements 15 are arranged in the exhaust manifold 10 for guiding exhaust gas towards the passages 31.

Each flow guiding element 15 comprises a tube wall 19 arranged on the partition wall 30, such that exhaust gas is guidable to the passage 31 between the tube wall 19 and the partition wall 30. The tube wall 19 and the partition wall 30 form an inlet tube 18 having a first end 16 which is open towards the passage 31 and with a second end 17 which is open towards the exhaust manifold 10.

Without the flow guiding element 15 exhaust gas entering the exhaust manifold 10 through one of the outermost inlet ports 11 would directly flow on a short way to the passage 31 below the respective inlet port. The exhaust gas would not mix with the reducing agent admitted by the reductant supply elements 12 of the central inlet ports 11a.

The flow guiding element 15 provides for deflecting the exhaust gas from the outermost inlet ports 11 towards the middle section 13 of the elongated exhaust manifold 10. Hence there is enough time for mixing of exhaust gas and reducing agent.

The tube wall 19 covers the passage 31, which generally may be closed by a louver valve not explicitly shown in the figures. In case the engine is operated in Tier II mode, wherein no reducing agent is supplied, a bypass 32 is open and the louver valve is closed, the tube wall prevents a direct stream of exhaust gas from the outermost inlet ports 11 to the passage 31, which might overcome the closed louver valve.

In case the engine is operated in Tier III mode, exhaust gas mixed with reducing agent enters the catalyst container 20 via the two passages 31 and passes three SRC elements 22 arranged in stacks 21.

The SCR elements 22 are arranged in a stack frame 26 which is guided along rails 25 within the catalyst container 20.

The stacks 21 can be removed from the catalyst container 20 when a cover 27 at the longitudinal end of the catalyst container 20 has been opened.

The cleaned exhaust gas arrives in a central passage 23 and leaves the exhaust gas after treatment device 100 via an exhaust outlet 24.

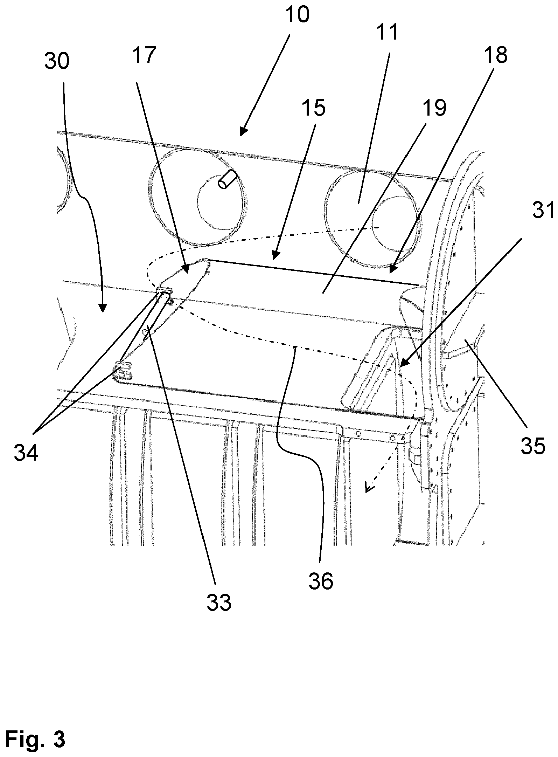

Figure 3 shows a schematic illustration of a detail of the first example according to Figure 2.

The tube wall 19 of the flow guiding element 15 is fixed to the partition wall 30 by clamping. The tube wall 19 comprises a clamping element 33 which snaps into brackets 34 arranged and fixed on the partition wall 30.

For maintenance, a cover 35 at the longitudinal end of the exhaust manifold 10 may be removed, the tube wall 19 may be pulled out of the exhaust manifold 10 and louver valves (not shown in the figures) for closing the passage 31 may be cleaned or renewed. Subsequently, the tube wall 19 may be inserted again.

Exhaust gas, entering the exhaust manifold 10 via an outermost inlet port 11 is deflected by the flow guiding element 15 to take an detour 36 through the open end 17 of the inlet tube 18 formed by the tube wall 19 and the partition wall 30 to get through the passage 31.

## Claims

1. Exhaust gas after treatment device (100) for an internal combustion engine comprising an elongated exhaust manifold (10) with a plurality of inlet ports (11) and a catalyst container (20),
wherein the exhaust manifold (10) and the catalyst container (20) are arranged adjacently next to one another and are delimited from one another by at least one partition wall (30) extending along a longitudinal direction (L),
wherein the exhaust gas manifold (10) is fluidly connected with the catalyst container (20) over at least one passage (31), which is provided in the partition wall (30), to guide exhaust gas into the catalyst container (20),
wherein at least one reductant supply element (12), for example an urea injector, is arranged in the exhaust manifold (10) within or close to at least one inlet port (11), **characterized in that**
at least one flow guiding element (15) is arranged in the exhaust manifold (10) for guiding exhaust gas towards the passage (31).

2. Exhaust gas after treatment device according to claim 1, wherein the exhaust gas after treatment device (100) comprises at least one flow guiding element (15) for each passage (31).

3. Exhaust gas after treatment device according to the preceding claims, wherein the flow guiding element (15) is an inlet tube (18) with a first end (16) which is open towards the passage (31) and with a second end (17) which is open towards the exhaust manifold (10).

4. Exhaust gas after treatment device according to claim 5, wherein the flow guiding element (15) comprises a tube wall (19) arranged on the partition wall (30), such that exhaust gas is guidable to the passage (31) between the tube wall and the partition wall (30).

5. Exhaust gas after treatment device according to the preceding claims, wherein at least one reductant supply element (12) is arranged in the middle section (13) of the elongated exhaust manifold (10).

6. Exhaust gas after treatment device according the preceding claims, wherein the exhaust gas after treatment device (100) comprises at least three inlet ports (11) for feeding exhaust gas into the exhaust manifold (10) arranged next to each other in longitudinal direction (L) and preferably at least one reductant supply element (12) is arranged in one of the central inlets (11c).

7. Exhaust gas after treatment device according to the preceding claims, wherein the partition wall (30) comprises two passages (31), each arranged at respective longitudinal ends of exhaust manifold (10).

8. Exhaust gas after treatment device according to the preceding claims, wherein the exhaust manifold comprises a bypass outlet (32) with a bypass valve.

9. Exhaust gas after treatment device according to the preceding claims, wherein the exhaust gas after treatment device (100) comprises louver valves for closing the passage (21).

10. Exhaust gas after treatment device according to the preceding claims, wherein the catalyst container (20) comprises two stacks (21) of SCR elements (22) and a central passage (23) which is connected or connectable to an exhaust outlet (24) .

11. Exhaust gas after treatment device according to the preceding claims, wherein stacks (21) of SCR elements (22) are arranged in the catalyst container (20) and the catalyst container (20) comprises rails (25) for each of the stacks (21) for guiding the stacks (21) along the longitudinal direction (L).

12. Internal combustion engine (1) comprising at least one cylinder and at least one exhaust gas after treatment device (100) according to at least one of the preceding claims, in particular comprising one exhaust gas after treatment device (100) for up to eight cylinders (3), preferably for up to six cylinders (3).

13. Method for exhaust gas after treatment in an exhaust gas after treatment device (100) according to one of claims 1-12, wherein exhaust gas is guided into the exhaust manifold via a plurality of inlet ports and wherein reducing agent is admitted via a reductant supply element (12), comprising the following steps
guiding exhaust gas and reducing agent along the flow guiding element (15), such that mixing of exhaust gas and reducing agent takes place at least while passing the flow guiding element (15) and before entering the catalyst container (20) via a passage (31) in the partition wall (30).
